# EUROPEAN PATENT SPECIFICATION

(11) **EP 2 098 846 B1**
(45) Date of publication and mention of the grant of the patent: **08.04.2020**
(21) Application number: 08253258.1
(22) Date of filing: 07.10.2008
(51) Int. Cl.: G01M 3/00, F17D 5/00

(54) **System and process for detecting leakage in umbilicals**
System und Verfahren für Dichtheitsdetektion in Verbindungsleitungen
Système et procédé de détection de fuites pour des liaisons ombilicales

(30) Priority: 05.03.2008 BR 800473
(43) Date of publication of application: 09.09.2009
(73) Proprietor: Petroleo Brasileiro S.A. - PETROBRAS, CEP 20035-900-Rio de Janeiro (BR)
(72) Inventor: Lobianco E Souza, Luiz Antonio, Rio de Janeiro RJ CEP: 22.01-030 (BR); Camerini, Cláudio Soligo, Niterói RJ - CEP:23.322-520 (BR); Costa, Luis Cláudio Sousa, Rio de Janeiro RJ - CEP:21.211-760 (BR); Rabelo, Alexandre Soares, Rio de Janeiro RJ - CEP:21.330-740 (BR); Da Silva, William Albuquerque, Macaé RJ - CEP:27.913-170 (BR); Brito, Jorge Luiz Farias, Rio de Janeiro RJ - CEP:27.193-170 (BR)
(74) Representative: J A Kemp LLP

(56) References cited:
- EP-A2- 0 258 014
- DE-A1- 2 457 369
- GB-A- 2 336 913

## Description

This invention relates to a system and process for detecting the place of leakage from umbilical hoses. The leakage detection system preferably comprises a device which is inserted into the leaking hose and external detecting equipment which is intended to identify the position of this device which is already inside the umbilical.

The invention also comprises a process for detecting the exact place of leakage from umbilical hoses after the identification of the leakage during operation.

Umbilical cables, especially when used in the petrochemical industry, can suffer the effects of wear between layers and fatigue damage promoted by the passage of extreme fluids or loads. Accordingly, a system is necessary for detecting leaks in the hoses which form part of an umbilical cable.

The increase in the use of submarine production systems has involved greater use of umbilical cables. The structure of this equipment usually comprises several concentric layers, these being polymeric and/or metal. Umbilicals comprise thermoplastic hoses and electrical cables, integrated in a single cable, and are intended for transmission of hydraulic and electrical energy, signals or even for making possible the injection of chemical products in various different applications so as to link the ocean surface with the ocean floor. The umbilical hose is often connected to various pieces of equipment, such as valves and other systems existing at the bottom of the sea. These umbilicals can be used in oil and gas marine product systems, among other uses. They can range from short lengths to many kilometres long, being most commonly found in lengths of many kilometres.

A PIG is a cylindrical or spherical device originally designed and used for the purpose of cleaning the inside of pipelines. It can range from a simple cylinder made of foam even to a more complex device like a cylindrical metal structure (chassis) which uses a transverse disc as a guide and seal.

According to Brazilian application PI 0601090-3, a system and method are suggested for detecting a leakage in fluid transport pipes, the system and method being intended to monitor and detect any leakage in any kind of pipe which transports inside it any kind of fluid which contains constituent elements capable of converting to radioactive tracing elements. The system comprises a plurality of neutron emitters and a plurality of gamma radiation detectors spaced, intercalated and fitted along the length of the external surface of a transport pipe. This solution has disadvantages, as it uses radioactive material, and so a restriction of operation occurs with material harmful to human health, it requires complex logistics for acquiring the equipment for its operation, restriction of the times of inspection and isolation of the area for control of access, in addition to being used in kinds of pipes which are more rigid for transporting fluid and not for umbilical cable hoses.

Brazilian application PI 0604996-6 describes a system and method for detecting leakage in offshore hose lines, where a fluid leakage detector is provided for a segment of double-carcass hose line which includes a sensor housing defined by side walls mounted externally to the hose line continuation and having an internal housing chamber communicating with the collection space. An optical sensor is mounted through at least one sensor housing side wall and positions an optical sensing element device inside the sensor housing chamber for detection of the presence of fluid in the hose collection space. This suggestion is limited to application in a double-carcass hose for petroleum loading and unloading offshore fluid transport, i.e. hose leakage detection systems set up in the context of these loading and unloading terminals.

EP 0,258,014 A2 describes a method and apparatus for determining of leaks in pipelines, but exclusively using radioactive materials in the carrier, by applying fluid pressure to cause the carrier body to move along the pipeline or conduit until it reaches the leak and the leak being scanned by radiation detection, where the other end of the pipeline is closed

According to the present invention, it is possible to detect leaks in umbilical cable hoses without involving harm to human health. Further, inspection can be carried out quickly and continuously. This technology does not create waste and is easy to operate.

The present invention provides a system for detecting the place of leakage in an umbilical hose according to claim 1.

A plug can conveniently be used to plug the other end of the umbilical hose into which the internal device is inserted.

The internal device is preferably a type of device known as a PIG.

The external detecting equipment is constructed and arranged to surround the umbilical hose in use and is movable along the outside of the umbilical hose. This allows detection to be performed without damaging the hose and allows a high throughput of hose, shortening the time to detect the leakage.

A pair of reels for holding the umbilical hose is preferably provided so that the detection can take place as the hose is reeled from one reel to the other reel.

The external detecting equipment may comprise two parts: one formed by a ring which surrounds the umbilical hose and has a sensor system, and another part comprising electronics capable of identifying the presence of the internal device.

In another aspect, the present invention comprises a process for detecting the place of leakage in an umbilical hose according to claim 5.

The process can additionally comprise:
detecting when the internal device has stopped moving along the umbilical hose by detecting a drop in the injection pressure of fluid.

In a convenient embodiment:
the umbilical hose is initially reeled onto a first reel;
the external equipment is placed between said first reel and a second reel; and
the umbilical hose is fed from the first reel, through the external equipment and onto the second reel while the external equipment is used to detect the position of the internal device.

The process may further comprise the initial step of determining that said umbilical hose has a leak and transporting said umbilical hose to a testing site.

The process may further comprise repairing the umbilical hose by removing the section of umbilical hose comprising the leakage.

In one embodiment, the system comprises a metal device (e.g. a PIG) which can comprise one or more parts, which is inserted in the hose which is leaking and external detecting equipment which is intended to identify the position of the device (PIG) which is already inside the umbilical.

In an embodiment of a process of the invention, the starting point is the identification of the leakage during operation and, from this point, the umbilical is removed from the field and is transported to the test site. After removal of the umbilical, a device is introduced into the leaking hose, the reel (or spool) with the umbilical is transferred to the inspection sector and subsequently the point of leakage is located. From this point, the umbilical is sent for repair, where the point of leakage is cut out and the parts are utilized, depending on their final length. The result obtained provides benefits such as economy and utilization of umbilicals.

The features of the system and process for detecting leakage in an umbilical will be better observed from the detailed description below, associated with the drawings referenced below, in which:-
Figure 1 is a schematic representation of the umbilical leakage detection system of a section of the hose belonging to the umbilical, with the use of an internal "PIG" device.
Figure 2 is a schematic representation of the system for detecting the stoppage of the PIG in the region of the leak in the umbilical hose with transfer from one reel to another, using the external detecting equipment.

The detailed description of the system and process for detecting leakage in an umbilical will be given in accordance with the identification of the components forming it, based on the description of the illustrations above.

This invention relates to a system and process for detecting the place of leakage from umbilical hoses which generally comprises a leakage detection system comprising an internal device which is inserted in the hose which is leaking and external detecting equipment which is intended to identify the position of the former which is already inside the umbilical.

The umbilical in which it is required to identify the exact place where there is leakage from one of its hoses is preferably taken out of service and removed prior to performing the inventive method. Alternatively, the method may be performed in situ under convenient circumstances.

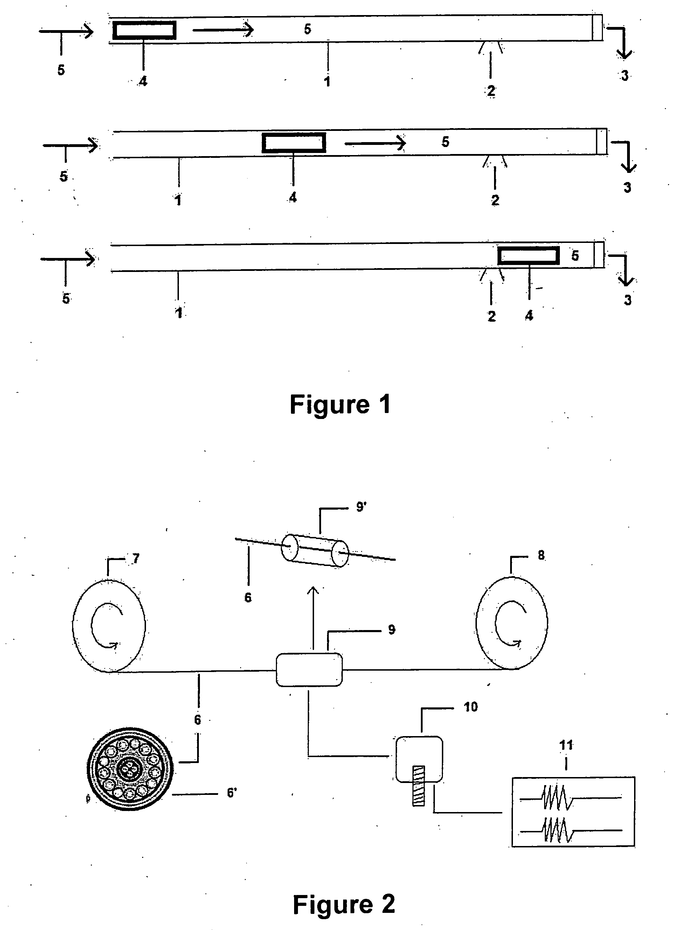

Figure 1 schematically illustrates the process of detecting leakage from a hose 1 in the umbilical where, once the umbilical hose 1 which has a leak 2 has been identified, the hose has one of its ends closed by a plug 3 or otherwise completely sealed. An internal device, here called a PIG 4, which can comprise one or more parts, is then inserted into one end of the hose 1 and hydrostatic or other fluid pressure is applied with water 5 or any other fluid, with or without control of the injection pressure. The internal device is preferably dimensioned to fit snugly in the hose, so that it is propelled by the fluid pressure until it reaches the location of the leak 2.

This operation is intended to displace the PIG 4 along the hose 1, as the leak 2 will allow the fluid 5 introduced into the hose 1 to leave the hose. The flowing fluid displaces the PIG 4 up to the position of the leakage 2 as, after the leak, it becomes impossible to displace the fluid 5 because, from there, this hose is closed, blocked and completely sealed. After a fall in the injection pressure has been detected or after some predetermined injection time, the PIG 4 immediately comes to a stop, just after the position of the leak.

The injection of fluid 5 into the hose 1 is then stopped and the umbilical cable 6 (shown in cross sectional view at 6') is transferred from a first reel 7 to a second reel 8, being passed through the external PIG detection device 9, as illustrated in Figure 2. When the section of umbilical where the PIG is situated passes through the external equipment 9, the system detects the presence of the internal device 4.

In accordance with Figure 2, the external equipment for detecting the internal device in the umbilical preferably comprises two parts, one formed by a ring 9' which surrounds the umbilical and has an appropriate sensor system, and another part which has electronics 10, capable of identifying the presence of the internal device and, with this, modifying the signal 11 so that it can be identified. The external equipment may comprise a means for setting up a magnetic or electromagnetic field so that the presence of the metal internal device may be sensed by a disruption of this field.

The exact place of leakage from the umbilical hose then being detected, a cut can be made in the umbilical, with subsequent repair and thus the region which had the leak can be removed and, depending on the lengths involved, use of the remaining parts is made possible, saving time and financial resources, i.e. their reuse. In spite of having been severed, it can be repaired again with the minimum loss in relation to its total length or the remaining parts can be used in other work.

The starting point for one preferred process of detecting leakage from a hose in an umbilical is the identification of the leakage during operation. From this point, the sequence below can be followed:
- Removal of the umbilical from the field and transport to the test site on a reel,
- Introduction of the device(s) into the leaking hose(s),
- Transfer of the reel (or spool) to the inspection sector and
- Location of the point with the leak using the internal and external equipment.

After this point, the umbilical can be sent for repair, whereby the leaky section is cut out and the remaining parts are utilized in accordance with their final length.

In a test, the internal device was located with a precision of 50 cm and the whole hose could be tested in approximately 40 minutes.

The result obtained represents good prospects for utilizing umbilicals. At present, there are in operation approximately 1,850 km of umbilicals installed in offshore activities. Considering that these leakage problems occur in approximately 30% of these components (a percentage obtained through a survey conducted within a large operator of this equipment) and considering it is typically possible to reuse 70% of their original length, a saving in excess of 380,000 metres of umbilicals can be foreseen.

The present invention is applicable to the detection of leaks in all types of hoses and utilises simple components to provide a fast and effective leak detection system.

## Claims

1. A system for detecting the place of leakage (2) in an umbilical hose (1), said system comprising:
an internal device (11) capable of being inserted into the leaking hose and movable along the hose; and
external detecting equipment (9) for mounting externally of the hose and being capable of identifying the position of the internal device inside the umbilical;
wherein said internal device is constructed and arranged to move along the umbilical hose under the action of fluid pressure applied at one end of the hose;
**characterised in that**:
the external detecting equipment is constructed and arranged to surround the umbilical hose in use and is movable along the outside of the umbilical hose; and
the internal device is a metal device and wherein the external detecting equipment is arranged to detect the metal internal device using an electromagnetic or magnetic field.

2. The system according to claim 1, further comprising a plug (3) for plugging the other end of the umbilical hose into which the internal device is inserted.

3. The system according to any one of the preceding claims, further comprising a pair of reels (7, 8) for holding the umbilical hose.

4. The system according to any one of the preceding claims, wherein said external detecting equipment comprises two parts: one formed by a ring (9') which surrounds the umbilical hose and has a sensor system, and another part comprising electronics (10) capable of identifying the presence of the internal device.

5. A process for detecting the place of leakage (2) in an umbilical hose (1), said process comprising:
introducing a metal internal device (4) into one end of said umbilical hose;
initially plugging the other end of the umbilical hose;
applying a fluid pressure to the one end of the umbilical hose so as to move the internal device along the umbilical hose to the place where the leakage is located; and
using external equipment (9) constructed and arranged to surround the umbilical hose in use and movable along the outside of the umbilical hose to detect the position of said internal device, by using an electromagnetic or magnetic field.

6. The process according to claim 5, further comprising:
detecting when the internal device has stopped moving along the umbilical hose by detecting a drop in the injection pressure of fluid.

7. The process according to claims 5 or 6, wherein:
the umbilical hose is initially reeled onto a first reel (7);
the external equipment is placed between said first reel and a second reel (8); and
the umbilical hose is fed from the first reel, through the external equipment and onto the second reel while the external equipment is used to detect the position of the internal device.

8. The process according to any one of claims 5 to 7, further comprising the initial step of determining that said umbilical hose has a leak and transporting said umbilical hose to a testing site.

9. The process according to any one of claims 5 to 8, further comprising repairing the umbilical hose by removing the section of umbilical hose comprising the leakage.

## Patentansprüche

1. System zum Erfassen der Leckstelle (2) in einem Versorgungsschlauch (1), das System umfassend:
eine interne Vorrichtung (11), die in den undichten Schlauch eingesetzt und entlang des Schlauchs bewegt werden kann; und
eine externe Erfassungseinrichtung (9) zum Anbringen extern des Schlauchs und die die Position der internen Vorrichtung innerhalb des Versorgungsschlauchs identifizieren kann;
wobei die interne Vorrichtung aufgebaut und angeordnet ist, um sich unter der Wirkung des an einem Ende des Schlauchs angelegten Fluiddrucks entlang des Versorgungsschlauchs zu bewegen;
**dadurch gekennzeichnet, dass**:
die externe Erfassungseinrichtung aufgebaut und angeordnet ist, um den verwendeten Versorgungsschlauch zu umgeben und entlang der Außenseite des Versorgungsschlauchs beweglich ist; und
die interne Vorrichtung eine Metallvorrichtung ist und wobei die externe Erfassungseinrichtung angeordnet ist, um die metallische interne Vorrichtung unter Verwendung eines elektromagnetischen oder magnetischen Feldes zu erfassen.

2. System nach Anspruch 1, ferner umfassend einen Stopfen (3) zum Verstopfen des anderen Endes des Versorgungsschlauchs, in den die interne Vorrichtung eingesetzt wird.

3. System nach einem der vorhergehenden Ansprüche, ferner umfassend ein Paar Rollen (7, 8) zum Halten des Versorgungsschlauchs.

4. System nach einem der vorhergehenden Ansprüche, wobei die externe Erfassungseinrichtung zwei Teile aufweist: eines, das durch einen Ring (9') gebildet ist, der den Versorgungsschlauch umgibt und ein Sensorsystem aufweist, und ein anderes Teil umfassend eine Elektronik (10), die das Vorhandensein der internen Vorrichtung identifizieren kann.

5. Verfahren zum Erfassen der Leckstelle (2) in einem Versorgungsschlauch (1), das Verfahren umfassend:
Einführen metallischen internen Vorrichtung (4) in ein Ende des Versorgungsschlauchs;
anfängliches Verstopfen des anderen Endes des Versorgungsschlauchs;
Anlegen eines Fluiddrucks an das eine Ende des Versorgungsschlauchs, um die interne Vorrichtung entlang des Versorgungsschlauchs an die Stelle zu bewegen, an der sich das Leck befindet; und
Verwenden einer externen Einrichtung (9), die aufgebaut und angeordnet ist, um den verwendeten Versorgungsschlauch zu umgeben und die entlang der Außenseite des Versorgungsschlauchs beweglich ist, um die Position der internen Vorrichtung unter Verwendung eines elektromagnetischen oder magnetischen Feldes zu erfassen.

6. Verfahren nach Anspruch 5, ferner umfassend: Erfassen, wann die interne Vorrichtung gestoppt hat, sich entlang des Versorgungsschlauchs zu bewegen, durch Erfassen eines Abfalls des Einspritzdrucks des Fluids.

7. Verfahren den Ansprüchen 5 oder 6, wobei:
der Versorgungsschlauch anfänglich auf eine erste Rolle (7) aufgewickelt wird;
die externe Einrichtung zwischen der ersten Rolle und einer zweiten Rolle (8) platziert wird; und
der Versorgungsschlauch von der ersten Rolle durch die externe Einrichtung und auf die zweite Rolle zugeführt wird, während die externe Einrichtung verwendet wird, um die Position der internen Vorrichtung zu erfassen.

8. Verfahren nach einem der Ansprüche 5 bis 7, ferner umfassend den anfänglichen Schritt des Bestimmens, dass der Versorgungsschlauch ein Leck aufweist, und des Transportierens des Versorgungsschlauchs zu einer Teststelle.

9. Verfahren nach einem der Ansprüche 5 bis 8, ferner umfassend Reparieren des Versorgungsschlauchs durch Entfernen des Abschnitts des Versorgungsschlauchs, der das Leck umfasst.

## Revendications

1. Système permettant de détecter la place d'une fuite (2) dans un flexible ombilical (1), ledit système comprenant :
un dispositif interne (11) capable d'être inséré dans le flexible fuyant et mobile le long du flexible ; et
un équipement de détection externe (9) destiné à un montage de manière externe au flexible et capable d'identifier la position du dispositif interne à l'intérieur de l'ombilical ;
ledit dispositif interne étant construit et agencé pour se déplacer le long du flexible ombilical sous l'action d'une pression de fluide appliquée à une extrémité du flexible ;
**caractérisé en ce que** :
l'équipement de détection externe est construit et agencé de façon à entourer le flexible ombilical en utilisation et est mobile le long de l'extérieur du flexible ombilical ; et
le dispositif interne est un dispositif en métal et l'équipement de détection externe étant agencé pour détecter le dispositif interne en métal à l'aide d'un champ électromagnétique ou magnétique.

2. Système selon la revendication 1, comprenant en outre un obturateur (3) destiné à obturer l'autre extrémité du flexible ombilical dans lequel le dispositif interne est inséré.

3. Système selon l'une quelconque des revendications précédentes, comprenant en outre une paire de bobines (7, 8) destinées à maintenir le flexible ombilical.

4. Système selon l'une quelconque des revendications précédentes, dans lequel ledit équipement externe comprend deux parties : l'une formée par une bague (9') qui entoure le flexible ombilical et possède un système de capteur, et une autre partie comprenant une électronique (10) capable d'identifier la présence du dispositif interne.

5. Procédé permettant de détecter la place d'une fuite (2) dans un flexible ombilical (1), ledit procédé comprenant :
l'introduction d'un dispositif interne en métal (4) dans une extrémité dudit flexible ombilical ;
l'obturation initiale de l'autre extrémité du flexible ombilical ;
l'application d'une pression de fluide à l'extrémité du flexible ombilical de façon à déplacer le dispositif interne le long du flexible ombilical vers la place où est située la fuite ; et
l'utilisation d'un équipement externe (9) construit et agencé pour entourer le flexible ombilical en utilisation et mobile le long de l'extérieur du flexible ombilical pour détecter la position dudit dispositif interne,
à l'aide d'un champ électromagnétique ou magnétique.

6. Procédé selon la revendication 5, comprenant en outre :
la détection du moment où le dispositif interne a arrêté son déplacement le long du flexible ombilical par la détection d'une chute de la pression d'injection de fluide.

7. Procédé selon les revendications 5 ou 6, dans lequel :
le flexible ombilical est initialement en roulé sur une première bobine (7) ;
l'équipement externe est placé entre ladite première bobine et une deuxième bobine (8) ; et
le flexible ombilical est fourni depuis la première bobine, à travers l'équipement externe et sur la deuxième bobine tandis que l'équipement externe est utilisé pour détecter la position du dispositif interne.

8. Procédé selon l'une quelconque des revendications 5 à 7, comprenant en outre l'étape initiale consistant à déterminer que ledit flexible ombilical a une fuite et à transporter ledit flexible ombilical jusqu'à un site de mise à l'essai.

9. Procédé selon l'une quelconque des revendications 5 à 8, comprenant en outre la réparation du flexible ombilical par retrait de la section du flexible ombilical comprenant la fuite.
